Europäisches Patentamt

European Patent Office

Office européen des brevets

(19)

(11) **EP 1 373 775 B1**

(12) ## FASCICULE DE BREVET EUROPEEN

(45) Date de publication et mention
de la délivrance du brevet:
**06.10.2004 Bulletin 2004/41**

(21) Numéro de dépôt: **02713006.1**

(22) Date de dépôt: **04.03.2002**

(51) Int Cl.$^7$: **F16L 15/06**

(86) Numéro de dépôt international:
**PCT/FR2002/000773**

(87) Numéro de publication internationale:
**WO 2002/073076 (19.09.2002 Gazette 2002/38)**

(54) **ELEMENT FILETE POUR JOINT FILETE TUBULAIRE RESISTANT A LA FATIGUE**

GEWINDEELEMENT FÜR ERMÜDUNGSBESTÄNDIGE ROHRSCHRAUBVERBINDUNG

FATIGUE-RESISTANT THREADED COMPONENT FOR A TUBULAR THREADED JOINT

(84) Etats contractants désignés:
**AT BE CH CY DE DK ES FI FR GB GR IE IT LI LU
MC NL PT SE TR**
Etats d'extension désignés:
**RO**

(30) Priorité: **09.03.2001 FR 0103249**

(43) Date de publication de la demande:
**02.01.2004 Bulletin 2004/01**

(73) Titulaires:
• **VALLOUREC MANNESMANN OIL & GAS
FRANCE**
**59620 Aulnoye-Aymeries (FR)**
• **SUMITOMO METAL INDUSTRIES, LTD.**
**Osaka-shi, Osaka 541-0041 (JP)**

(72) Inventeurs:
• **NOEL, Thierry**
**F-59990 Sebourg (FR)**
• **ROUSSIE, Gabriel**
**F-59370 Mons en Baroeul (FR)**

(74) Mandataire: **Pellicani, Félix Angelo**
**SETVAL,130 rue de Silly**
**92100 Boulogne-Billancourt (FR)**

(56) Documents cités:
**EP-A- 0 482 266          WO-A-00/14442**
**US-A- 3 882 917**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 373 775 B1

**Description**

La présente invention concerne un élément fileté mâle ou femelle d'un joint fileté tubulaire particulièrement apte à résister aux sollicitations tant statiques que cycliques ainsi qu'un joint fileté tubulaire particulièrement apte à résister aux sollicitations tant statiques que cycliques.

Les joints filetés tubulaires comprennent un élément fileté mâle en extrémité d'un premier tube généralement de grande longueur et un élément fileté femelle en extrémité d'un second tube qui peut être un tube de grande longueur ou un manchon.

Ils sont notamment utilisés pour constituer des colonnes de tubes de cuvelage ou de production ou des trains de tiges de forage pour des puits d'hydrocarbures ou pour des puits similaires tels que, par exemple, des puits pour la géothermie.

L'American Petroleum Institute (API) définit dans ses spécifications 5B et 5CT des joints filetés entre tubes de cuvelage ou entre tubes de production à filetages coniques.

Des joints filetés tubulaires dits supérieurs (ou "premium") qui possèdent des caractéristiques d'étanchéité malgré des sollicitations très diverses sont décrits par exemple dans les brevets EP 488 912, US 5 687 999.

De tels joints filetés peuvent mettre en oeuvre des filetages cylindriques ou coniques à une ou deux parties filetées.

Jusqu'à il y a peu de temps, les tubes de cuvelage ou de production devaient essentiellement être capables de résister à différentes combinaisons de sollicitations statiques (traction axiale, compression axiale, flexion plane, pression intérieure ou extérieure) malgré leur épaisseur limitée résultant de la nécessité, pour pouvoir exploiter un puits profond, d'enfiler les unes dans les autres diverses colonnes de diamètres différents.

Au contraire, les tiges de forage qui ne sont utilisées que pour creuser les puits sont conçus pour résister à des sollicitations cycliques importantes mais ne sont par contre pas soumises à des exigences d'encombrement intérieur, un seul train de tiges d'un diamètre donné étant descendu à un moment donné.

Les sollicitations cycliques, si elles ne sont pas strictement limitées, conduisent en service sur les tiges de forage à des ruptures par fatigue initiées à la racine des filets, généralement du côté des flancs porteurs, plus particulièrement au niveau des derniers filets en prise des éléments filetés.

On désigne dans la suite du présent document par premiers filets les filets qui, en coupe longitudinale passant par l'axe de l'élément fileté, sont situés du côté de l'extrémité frontale de l'élément fileté. Les derniers filets sont par conséquent ceux situés à l'autre extrémité du filetage.

Par filets en prise, on entend tout d'abord les filets des éléments filetés d'un joint fileté tubulaire à l'état vissé qui transfèrent axialement la charge d'un élément fileté à l'élément fileté conjugué, que ces filets soient parfaits (de hauteur complète) ou imparfaits (de hauteur incomplète ou partielle, par exemple des filets évanouissants ou naissants). Lorsque le joint fileté est soumis à des efforts axiaux de traction, ce qui est généralement le cas, les filets en prise sont ceux dont les flancs porteurs sont en contact.

Par extension, on entend dans le présent document par filets en prise d'un élément fileté isolé les filets destinés à transférer la charge aux filets correspondants d'un élément fileté conjugué lorsque ces deux éléments filetés sont assemblés pour constituer un joint fileté tubulaire.

La position des filets en prise d'un élément fileté est connue par le dessin de l'élément fileté car c'est une donnée nécessaire pour prévoir la résistance du joint fileté résultant. La position des derniers ou des premiers filets en prise peut donc parfaitement être définie sur un élément fileté destiné à réaliser un joint fileté tubulaire.

Le problème de tenue à la fatigue ne se pose cependant désormais plus seulement pour les tiges de forage mais aussi pour les colonnes de tubes d'exploitation de certains puits pour hydrocarbures dont les joints filetés tubulaires permettant de constituer de telles colonnes doivent alors être capables de supporter à la fois des sollicitations statiques élevées et des sollicitations cycliques.

On rencontre notamment de telles exigences de tenue aux sollicitations dans les colonnes sous-marines reliant le fond de la mer aux plates-formes d'exploitation en mer des hydrocarbures.

De telles colonnes de tubes dits "risers" dans le langage anglo-saxon de l'homme du métier sont en effet soumises aux sollicitations cycliques causées notamment par les courants qui induisent des mises en vibration de la colonne, par la houle, par les marées et le déplacement éventuel des plates-formes elles-mêmes.

On rencontre également de telles exigences de tenue aux sollicitations dans des puits terrestres, notamment lors de la descente en rotation de tubes pour cimenter les puits dans le cas très fréquent de puits déviés de la verticale présentant des coudes.

L'état de la technique des assemblages filetés tubulaires ou non tubulaires (du type vis-écrou par exemple) propose des moyens pour améliorer la résistance à la fatigue des assemblages filetés soumis à des charges de traction axiales pouvant varier cycliquement.

Le brevet US 3 933 074 décrit un écrou pour un assemblage boulonné dont le filetage intérieur est interrompu au niveau des premiers filets en prise par plusieurs cannelures axiales disposées régulièrement sur la périphérie du filetage de manière à déplacer la zone de transfert maximale de contrainte de traction axiale entre vis et écrou depuis le premier filet femelle en prise vers le milieu de longueur axiale de l'écrou.

Ces cannelures dont la longueur peut atteindre la moitié de la longueur du filetage et dont la profondeur peut aller jusqu'à 80% de la hauteur de filet augmentent la flexibilité des premiers filets en prise mais réduisent d'environ 20 % la surface portante des filets dans la zone où elles sont réalisées, ce qui est un inconvénient lorsque l'on cherche à obtenir une résistance élevée aux sollicitations statiques et à obtenir un joint fileté tubulaire étanche entre l'intérieur et l'extérieur des tubes.

En outre, les solutions pour les boulons dans lesquels les écrous sont en appui du côté des premiers filets contre la tête de vis (du côté des derniers filets de vis) ne sont pas forcément directement applicables à des joints filetés tubulaires.

On connaît par ailleurs par les demandes de brevet WO 00/14441 et WO 00/14442 des joints filetés qui comportent une gorge dans les filets pour diminuer la raideur de la structure des filets dans le but de diminuer le couple de vissage. Ces documents ne divulguent aucune modalité de gorge propre à améliorer la résistance des joints filetés aux sollicitations cycliques.

On a cherché dans la présente invention à réaliser un élément fileté mâle ou femelle pour joints filetés tubulaires, qui soit particulièrement résistant à la fois :

a) aux sollicitations statiques, notamment de traction axiale, de compression axiale, de flexion, de torsion, de pression intérieure ou extérieure, de déboîtement lors du vissage, simples ou combinées (par exemple traction + pression intérieure) ;
b) aux sollicitations cycliques de traction-compression ou de flexion en réduisant le transfert de charge dans les zones des premiers et derniers filets en prise et en minimisant les coefficients de concentration de contrainte (SCF) dans ces zones.

On a aussi cherché à ce que l'élément fileté selon l'invention puisse être réalisé avec toutes sortes de filetages, coniques, cylindriques, combinés cylindro-coniques, à un ou plusieurs étages, à filets interférant radialement et/ou en contact par leurs flancs ; des filets en contact par leurs deux flancs avec les flancs correspondants du filet conjugué sont par exemple du type dit "rugged thread" décrit dans la demande de brevet EP 454 147, du type à frettage axial décrit dans la demande de brevet WO 00/14441 ou de type coin à largeur variable comme décrit par exemple dans le brevet US Re 30 647.

On a en outre cherché à ce que l'élément fileté puisse être facilement réalisé et facilement contrôlé.

L'élément fileté selon l'invention doit pouvoir être utilisé pour constituer des joints filetés tubulaires destinés à des colonnes de tubes de production d'hydrocarbures, de cuvelage de puits ou d'exploitation sous-marine ("risers") ou destinés à des usages similaires.

On a en outre cherché à ce que les joints filetés tubulaires réalisés soient particulièrement étanches, notamment aux gaz, même sous sollicitations cycliques.

On a aussi cherché à ce que l'élément fileté selon l'invention puisse être mis en oeuvre pour constituer des trains de tiges de forage.

On a aussi cherché à réaliser un joint fileté tubulaire dans lequel un ou les deux éléments filetés ont été modifiés pour résister aux sollicitations cycliques.

L'élément fileté mâle ou femelle selon l'invention est réalisé en extrémité d'un tube et comporte extérieurement un filetage mâle ou intérieurement un filetage femelle selon que l'élément fileté est un élément fileté mâle ou un élément fileté femelle.

Il est destiné à être assemblé à un élément fileté du type conjugué (c'est-à-dire femelle si l'élément fileté considéré est mâle et réciproquement) pour constituer un joint fileté tubulaire résistant aux sollicitations cycliques.

Le filetage est constitué d'au moins une partie filetée. Lorsque le filetage comprend plusieurs parties filetées, celles-ci peuvent être distantes l'une de l'autre axialement et/ou radialement, par exemple dans des parties filetées étagées.

La ou chaque partie filetée du filetage comprend en s'éloignant de l'extrémité frontale de l'élément fileté trois zones de longueur sensiblement identique : une zone dite de premiers filets en prise, une zone dite de filets médians et une zone dite de derniers filets en prise, la définition des premiers et derniers filets en prise correspondant à celle indiquée plus haut dans l'état de la technique.

Certaines de ces zones peuvent comporter des filets de hauteur partielle tels que des filets évanouissants ou naissants.

Une gorge hélicoïdale est réalisée sensiblement radialement dans les filets d'au moins une fraction de la longueur axiale d'au moins une partie filetée de manière à déboucher en sommet de filet en définissant de part et d'autre de la gorge un demi-filet porteur et un demi-filet d'engagement respectivement du côté flanc porteur et du côté flanc d'engagement. La gorge peut toutefois ne déboucher que partiellement sur le sommet de filet.

Dans chaque partie filetée où elle est réalisée, la gorge est réalisée dans tout ou partie des filets d'une ou des deux zones d'extrémité, à savoir la zone de premiers filets en prise et la zone des derniers filets en prise et elle peut être optionnellement réalisée dans les filets de la zone de filets médians ; les caractéristiques géométriques de la gorge sont telles qu'elles diminuent la raideur des filets avec gorge de la zone ou des zones d'extrémité par rapport à la raideur des filets de la zone de filets médians.

La raideur des filets avec gorge est déterminée par l'aptitude à la flexion et/ou au cisaillement des demi-filets sollicités qui sont généralement les demi-filets porteurs compte tenu des sollicitations en traction axiale auxquelles sont généralement soumis les joints filetés tubulaires ; le même concept inventif peut toutefois être adapté à des demi-filets d'engagement lorsque ceux-ci sont sollicités ou sont aussi sollicités, par exemple dans des joints filetés tubulaires travaillant en compression.

La raideur d'un filet est définie comme le coefficient de proportionnalité entre d'une part la charge axiale transférée par le filet considéré au filet correspondant d'un élément fileté conjugué d'un joint fileté tubulaire et d'autre part la déformation axiale subie par le filet considéré.

Dans un joint fileté tubulaire la gorge selon l'invention diminue, par rapport à un joint fileté tubulaire similaire avec filets sans gorge, le transfert de charge axiale entre les filets de la zone ou des zones de filets où la gorge est réalisée et les filets correspondants de l'élément fileté conjugué en redistribuant la charge globale axiale entre les différents filets en prise du filetage ; on obtient par là une amélioration significative de la résistance du joint fileté tubulaire aux sollicitations dynamiques, notamment de flexion, superposées aux sollicitations statiques en traction axiale.

Les premiers filets en prise d'un élément fileté coopérant dans un joint fileté tubulaire avec les derniers filets en prise de l'élément fileté conjugué, on obtient, en disposant une gorge soit au niveau des premiers filets en prise de chacun des deux éléments filetés soit au niveau de leurs derniers filets en prise soit à la fois à ces deux niveaux d'un seul ou des deux éléments filetés, le même effet technique d'égalisation du transfert de charge par filet dans les premiers et dans les derniers filets des parties filetées où la gorge est réalisée par rapport au transfert de charge par filet dans la zone de filets médians.

La gorge peut aussi être réalisée dans tout ou partie des filets de la zone de filets médians pourvu qu'elle diminue davantage la raideur des filets avec gorge de la zone ou des zones d'extrémité que la raideur des filets de la zone de filets médians.

Il est alors possible de faire travailler de manière améliorée voire optimale tous les filets de la partie filetée où est implantée la gorge et de la partie filetée correspondante de l'élément fileté conjugué d'un joint fileté tubulaire.

A noter que la gorge selon l'invention peut également réduire les contraintes sur les filets des zones de premiers ou derniers filets en prise générées par l'erreur de pas entre filets mâles et femelles d'un joint fileté tubulaire, erreur de pas résultant des tolérances de fabrication des filetages.

Elle peut permettre aussi de limiter des surpressions néfastes de graisse de lubrification des filets au vissage.

Préférentiellement, la gorge est réalisée dans les filets de la zone de premiers filets en prise et optionnellement dans les filets de la zone de filets médians et elle n'affecte pas les filets de la zone des derniers filets en prise qui restent pleins; de manière à diminuer la raideur des filets de la zone de premiers filets en prise par rapport à la raideur des filets de la zone de filets médians.

Il a été constaté dans ce cas par les inventeurs que la gorge selon l'invention réduisait la valeur maximale du coefficient de concentration de contrainte (SCF) de la section de paroi en pied de filet conjugué, le coefficient SCF étant une grandeur relative obtenue en rapportant la contrainte maximale à l'endroit considéré à la contrainte au corps du tube correspondant. La gorge selon l'invention diminue donc la contrainte maximale dans la paroi au pied de filet de la zone de derniers filets en prise du filetage conjugué, paroi qui est dans cette zone de filets soumise à la charge globale de traction axiale sur le joint fileté tubulaire et diminue de ce fait les risques d'amorçage de fissure de fatigue à ce niveau.

On peut ainsi faire travailler les éléments filetés d'un joint fileté tubulaire avec de fortes variations cycliques de charge sans en modifier les performances de tenue en traction axiale.

Préférentiellement la gorge est obtenue par action d'un outil de forme sur les filets de la partie filetée considérée. Il s'ensuit que sa forme est définie par le profil de l'outil de forme et que sa profondeur mesurée depuis le sommet de filet jusqu'en fond de gorge est définie par l'enfoncement de l'outil de forme dans les filets.

Préférentiellement la raideur des filets augmente progressivement du fait de la gorge depuis le filet d'extrémité en prise de la zone ou des zones d'extrémité présentant une gorge en allant vers la zone de filets médians.

Le filet d'extrémité en prise d'une zone d'extrémité est le premier filet en prise lorsque la gorge est réalisée dans les filets de la zone de premiers filets en prise et le dernier filet en prise lorsque la gorge est réalisée dans les filets de la zone de derniers filets en prise. C'est à la fois le premier et le dernier filet en prise lorsque la gorge est réalisée à la fois dans les filets de la zone de premiers filets en prise et de la zone de derniers filets en prise.

Avantageusement, la profondeur de la gorge diminue, de préférence régulièrement, depuis le filet d'extrémité en prise de la zone ou des zones d'extrémité présentant une gorge en allant vers la zone de filets médians.

Alternativement ou en complément, la gorge possède un pas d'hélice différent de celui des filets de la partie filetée où elle est réalisée.

Préférentiellement, l'enveloppe des fonds de gorge est une surface conique coaxiale à l'axe de l'élément fileté.

En variante, l'enveloppe des fonds de gorge est une surface de révolution coaxiale à l'axe de l'élément fileté et à génératrice non rectiligne telle que, par exemple, une surface torique, une surface paraboloïde ou hyperboloïde ou encore une surface composite de plusieurs surfaces de révolution raccordées l'une à l'autre bout à bout.

Selon l'une ou l'autre de ces variantes, lorsque la gorge est réalisée dans la zone des premiers filets en prise, la pente de la génératrice de l'enveloppe des fonds de gorge correspondants est de préférence supérieure à la pente de la partie filetée où est implantée la gorge, que cette dernière pente soit positive (filetages coniques) ou nulle (filetages cylindriques). Elle est préférentiellement inférieure à celle de la partie filetée lorsque la gorge est réalisée dans la zone des derniers filets en prise.

Avantageusement pour notamment permettre un engagement dans de bonnes conditions de l'élément fileté mâle dans l'élément fileté femelle, la gorge ne débouche pas sur les flancs d'engagement lorsque les filets sont de forme générale trapézoïdale.

Avantageusement aussi, l'élément fileté peut comprendre une butée dont la surface de butée est constituée par l'extrémité frontale de l'élément fileté et qui est mise en compression axiale.

La gorge étant réalisée au niveau des premiers filets en prise et diminuant la raideur axiale de ceux-ci permet avantageusement d'accumuler une déformation absolue de compression axiale dans la butée en fin de vissage du joint fileté constitué avec un élément fileté conjugué.

Lorsque le filetage est séparé de l'extrémité frontale de l'élément fileté par une lèvre relativement courte sinon inexistante, la gorge permet d'augmenter la longueur axiale qui est effectivement déformée par compression par rapport à un élément fileté similaire de l'état de la technique et ainsi d'accumuler une déformation absolue plus importante dans la butée. Or on a souvent intérêt à avoir une lèvre courte lorsqu'une portée d'étanchéité est réalisée à l'extrémité périphérique de la lèvre si l'on cherche une étanchéité optimale.

En variante, l'élément fileté peut comprendre une première butée dont la surface de butée est constituée par l'extrémité frontale de l'élément considéré et une deuxième butée disposée de manière à coopérer sur un joint fileté tubulaire vissé en position avec une butée en extrémité frontale d'un élément fileté conjugé. Dans ce cas, la présence de gorge(s) sur les éléments filetés permet avantageusement aux deux butées de l'élément fileté considéré d'être toutes deux en appui contre deux butées correspondantes de l'élément fileté conjugué.

Une telle double mise en appui est normalement rendue difficile sur des joints filetés tubulaires de l'état de la technique sauf à disposer de manière coûteuse les deux butées avec grande précision l'une par rapport à l'autre ou à allonger de manière défavorable les lèvres. L'augmentation de la longueur effective de mise en compression axiale des butées par les gorges permet de réaliser plus aisément cette double mise en butée que sur un joint fileté tubulaire à deux jeux de butées de l'état de la technique.

D'autres avantages apparaîtront dans les modes de réalisation décrits ci-après et dans les dessins annexés.

La figure 1 représente schématiquement en demi-coupe axiale un élément fileté femelle d'un joint fileté tubulaire selon l'invention.

La figure 2 représente le filetage de l'élément fileté de la figure 1 dont les filets sont en cours d'usinage.

La figure 3 représente un détail des premiers filets en prise de l'élément fileté femelle de la figure 1.

La figure 4 représente schématiquement en demi-coupe axiale un élément fileté mâle selon l'invention adapté à l'élément fileté femelle de la figure 1.

La figure 5 représente le filetage de l'élément fileté mâle de la figure 4 dont les filets sont en cours d'usinage.

La figure 6 représente un détail des premiers filets en prise de l'élément fileté mâle de la figure 4.

La figure 7 représente en demi-coupe axiale un joint fileté tubulaire selon l'invention obtenu après vissage en position des éléments filetés des figures 1 et 4.

La figure 8 représente en demi-coupe axiale une variante de joint fileté tubulaire selon l'invention.

La figure 9 représente en demi-coupe axiale une autre variante de joint fileté tubulaire selon l'invention.

La figure 10 représente un détail des premiers filets en prise d'une variante d'élément fileté femelle selon l'invention.

La figure 11 représente un détail des premiers filets en prise d'une variante d'élément fileté mâle selon l'invention.

La figure 12 représente schématiquement l'évolution du transfert de charge entre les filets d'un joint fileté tubulaire standard et d'un joint fileté tubulaire selon l'invention.

La figure 13 représente schématiquement de la même manière que pour la figure 12 l'évolution du coefficient de concentration de contrainte en pied de filet pour le filetage mâle et pour le filetage femelle.

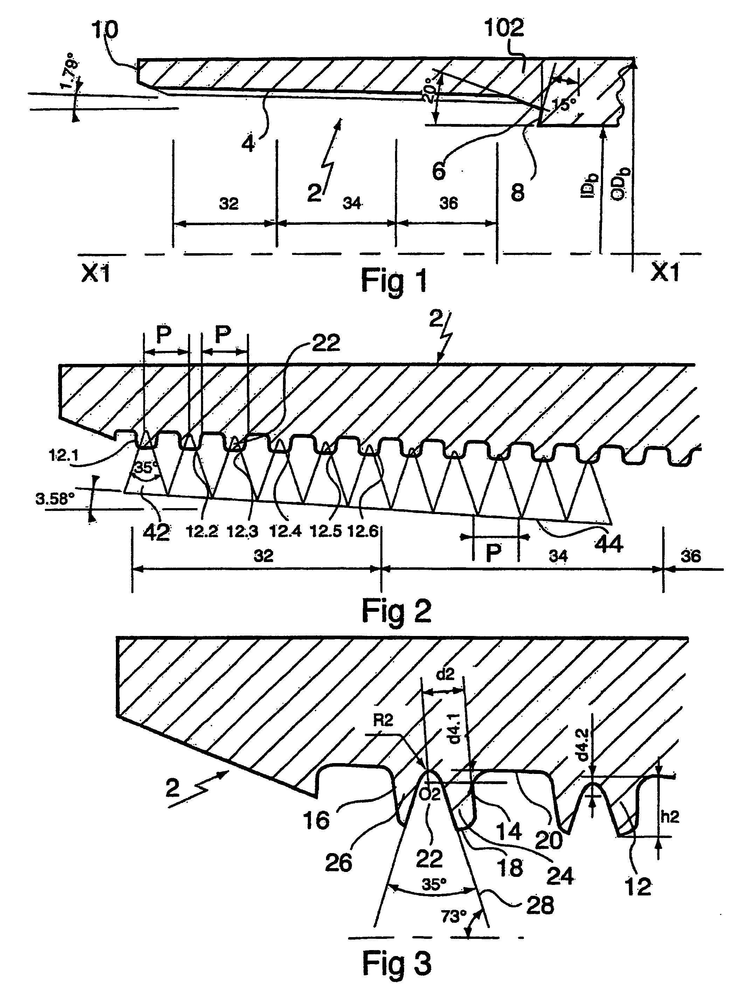

La figure 1 représente un élément fileté femelle 2 disposé en extrémité d'un tube 102.

Le tube 102 peut être selon le cas un tube de grande longueur, c'est-à-dire de longueur voisine de 10 m ou davantage ou un manchon de quelques dizaines de cm de longueur dont on ne voit à la figure 1 qu'une moitié. Dans le 1$^{er}$ cas, l'élément fileté femelle 2 permet de réaliser un joint fileté dit "intégral" ; dans le second cas il permet de réaliser un assemblage fileté manchonné.

L'élément fileté femelle 2 comprend intérieurement depuis son extrémité frontale 10 un filetage femelle 4 composé d'une seule partie filetée, une portée d'étanchéité 6 et une butée 8.

La portée d'étanchéité femelle 6 est une surface conique inclinée de 20° sur l'axe X1X1 de l'élément fileté 2.

La butée 8 est une surface sensiblement transversale et plus particulièrement légèrement conique convexe et forme un épaulement interne sur l'élément fileté 2.

Le filetage femelle 4 est du type conique de demi-angle au sommet 1,79° (conicité = 6,25 %) à filets trapézoïdaux 12.

Le filetage 4 comporte une zone de premiers filets en prise 32 constituée par les six premiers filets du côté extrémité frontale 10 de l'élément fileté, une zone de derniers filets en prise 36 constituée par les six filets depuis l'avant-dernier filet femelle et une zone de filets médians 34 comprenant six filets entre les zones 32 et 36.

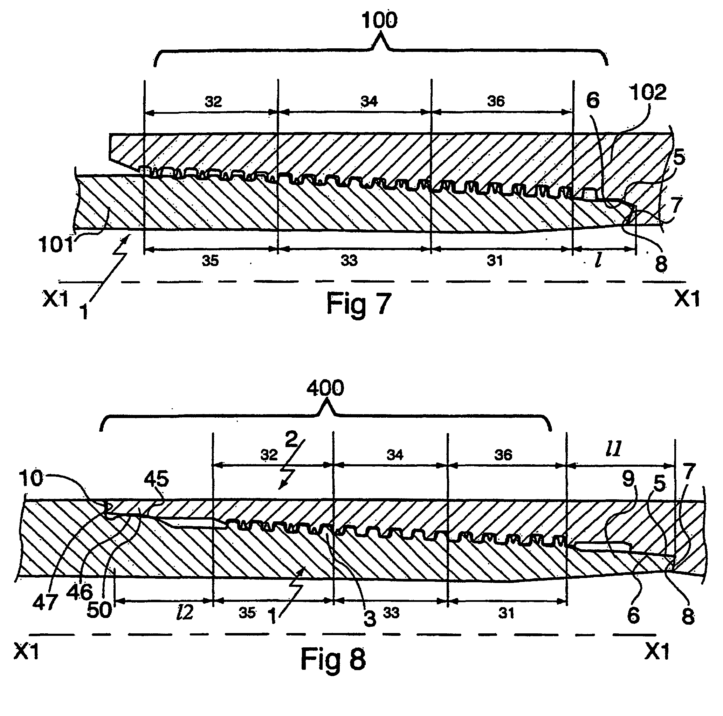

Le dernier filet du filetage n'est pas conçu pour être un filet en prise (voir figure 7).

Le nombre de filets des zones 32 et 36 de premiers et derniers filets en prise correspond à 1/3 du nombre total de filets en prise.

Comme le montre en détail la figure 3, les filets femelles 12 comportent de manière générale un sommet de filet 18, un fond de filet 20, un flanc d'engagement 16 tourné vers l'extrémité frontale 10 de l'élément fileté et un flanc porteur 14 sur le flanc opposé.

Une gorge hélicoïdale 22 est usinée dans les filets 12 à l'aide d'un outil de forme 42 indépendamment de la taille des filets 12.

Cet outil de forme 42 a une forme en V inversé arrondi définie par un angle de 35° entre les branches du V et un sommet arrondi de rayon 0,4 mm.

L'outil 42 est positionné de manière à entailler les filets sensiblement radialement à partir du sommet de filet suivant un profil en V à fond arrondi en laissant de part et d'autre de l'outil deux demi-filets, un demi-filet porteur 24 du côté flanc porteur 14 et un demi-filet d'engagement 26 du côté flanc d'engagement 16, sans entamer les flancs de filet.

L'outil de forme 42 est déplacé comme sur la figure 2 depuis le premier filet 12.1 suivant une hélice de pas p identique au pas du filetage femelle 4, la base de l'outil s'appuyant sur une surface conique dont on voit la génératrice 44. Cette surface conique a une conicité double de celle du filetage 4 (angle de 3,58° entre génératrice 44 et axe de l'élément fileté) de sorte que la gorge 22 possède une profondeur qui diminue progressivement du premier filet en prise 12.1 jusqu'à devenir nulle au niveau du onzième filet 12.11 et au-delà jusqu'au dernier filet.

La gorge 22 permet de diminuer la raideur des filets de la zone 32 des premiers filets en prise par rapport à la raideur des filets de zone 34 des filets médians.

Les filets 12 étant soumis une fois vissés à une pression de contact sur les flancs porteurs 14, leur raideur est déterminée par l'aptitude à la flexion du demi-filet porteur 24 et notamment par sa géométrie.

Cette géométrie peut être caractérisée par l'inclinaison du flanc porteur 14 et du flanc de gorge 28 par rapport à l'axe de l'élément fileté, par la distance d2 entre flanc porteur 14 et centre $O_2$ de l'arrondi de fond de gorge et par la distance d4 entre le point $O_2$ et la ligne enveloppe des fonds de filet. Le pas de l'hélice de la gorge 22 étant le même que celui des filets 12, la distance d2 varie très peu d'un filet à l'autre.

Compte tenu de la pente supérieure de la génératrice 44 par rapport à celle du filetage, la distance d4 augmente continûment à partir du premier filet 12.1, de sorte que l'on a d4.1 < d4.2 < d4.3 et ainsi de suite.

Il s'ensuit que la raideur des filets femelles 12 est minimale au niveau des filets de la zone 32 des premiers filets en prise et qu'elle est maximale au niveau des filets sans gorge de la zone 36 des derniers filets en prise et de la zone 34 de filets médians ; la raideur des filets femelles 12 de la zone 32 des premiers filets en prise est en outre inférieure à celle des filets avec gorge de faible profondeur dans la zone 34 de filets médians.

La raideur des filets augmente progressivement avec la diminution de profondeur de la gorge depuis le premier filet en prise 12.1 (filet d'extrémité) en allant vers la zone de filets médians 34.

La distance d4.1 est légèrement supérieure au rayon R2 du fond de gorge de sorte que le fond de gorge ne dépasse à aucun moment l'enveloppe des fonds de filet qui ne présente pas de gorge.

On pourrait toutefois réaliser sans inconvénient majeur une gorge qui coupe l'enveloppe des fonds des premiers filets (par exemple d4.1 = 0) dans la mesure où la section critique de l'élément fileté 2 (qui supporte en service toute la charge axiale sur l'élément fileté 2) est située au niveau du dernier filet qui ne présente pas de gorge.

Lorsque par contre on réalise une gorge dans la zone des derniers filets en prise, il faut éviter de réaliser une gorge dont le fond sorte du volume compris entre l'enveloppe des fonds 20 et celle des sommets de filet 18 si on ne veut pas détériorer les performances en service du joint fileté tubulaire intégrant l'élément fileté 2.

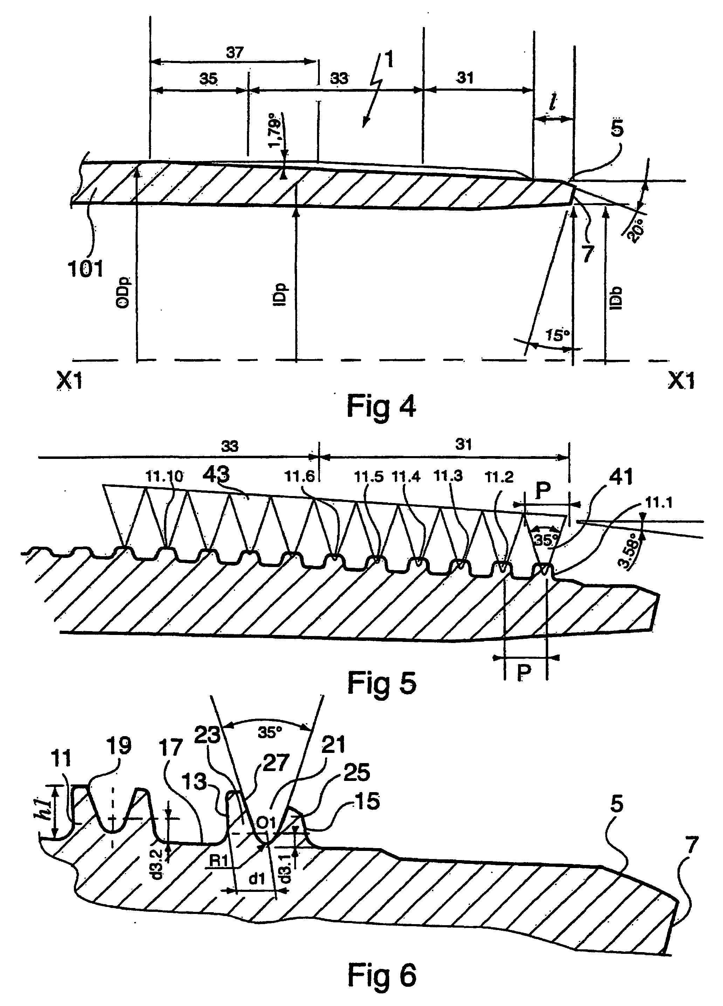

La figure 4 représente un élément fileté mâle 1 disposé en extrémité d'un tube 101 de grande longueur.

L'élément fileté 1 comprend extérieurement depuis son extrémité frontale 7 formant butée une portée d'étanchéité 5 et un filetage mâle 3.

La butée 7 est une surface légèrement conique concave destinée à coopérer avec la butée 8 sur l'élément fileté femelle 2.

La portée d'étanchéité 5 est une surface conique inclinée de 20° sur l'axe X1X1 de l'élément fileté 1 et destinée à coopérer avec la portée d'étanchéité femelle 6.

Le filetage mâle 3 est composé d'une seule partie filetée ; il est du type conique et adapté à coopérer avec le filetage femelle 4.

Il comprend dix-huit filets trapézoïdaux 11 en prise, les huit derniers filets portant la référence 37 étant de hauteur incomplète (filets dits évanouissants ou encore "run out").

Les six premiers filets constituent la zone 31 des premiers filets en prise, le premier filet étant chanfreiné du côté extrémité frontale pour faciliter l'engagement.

Les six derniers filets qui sont tous évanouissants forment la zone 35 des derniers filets en prise.

Les six filets intermédiaires forment la zone 33 des filets médians.

Les filets mâles 11 comportent comme les filets femelles un sommet de filet 19, un fond de filet 17, un flanc d'engagement 15 tourné vers l'extrémité frontale 7 de l'élément fileté et un flanc porteur 13 sur le flanc opposé (voir figure 6).

Une gorge hélicoïdale 21 est usinée dans les filets 11 à l'aide d'un outil de forme 41 (semblable à celui pour usiner la gorge 22 dans les filets femelles 12) ; l'usinage de la gorge est réalisé indépendamment de la taille des filets 11.

L'outil de forme 41 entaille les filets sensiblement radialement à partir du sommet de filet en laissant de part et d'autre deux demi-filets, un demi-filet porteur 23 du côté flanc porteur et un demi-filet d'engagement 25 du côté flanc d'engagement, sans entamer les flancs de filet.

L'outil de forme 41 est déplacé comme sur la figure 5 suivant une hélice de pas p identique au pas du filetage mâle 3, la base de l'outil s'appuyant sur une surface conique de génératrice 43.

Cette surface conique possède une conicité double de celle du filetage 3 (soit un angle de 3,58° entre génératrice 43 et axe de l'élément fileté 1) de sorte que la gorge 21 possède une profondeur qui diminue progressivement du premier filet en prise 11.1 jusqu'à devenir nulle au niveau du $10^e$ filet 11.10.

La gorge 21 permet de diminuer la raideur des filets de la zone 31 des premiers filets en prise par rapport à la raideur de la zone 33 de filets médians.

Comme dans le cas des filets femelles, la raideur des filets mâles est déterminée par la géométrie du demi-filet porteur 23 et notamment par l'inclinaison du flanc porteur 13 et du flanc de gorge 27 par rapport à l'axe de l'élément fileté, par la distance d1 entre flanc porteur 13 et centre $O_1$ de l'arrondi de fond de gorge et par la distance d3 entre le point $O_1$ et la ligne enveloppe des fonds de filet.

Le pas de l'hélice de la gorge 21 étant le même que celui des filets 11, la distance d1 varie très peu d'un filet à l'autre.

Compte tenu de la pente supérieure de la génératrice 43 par rapport à celle du filetage, la distance d3 augmente continûment à partir du premier filet 11.1 de sorte que l'on a : d3.1 < d3.2 < d3.3 et ainsi de suite.

Il s'ensuit que la raideur des filets mâles 11 est minimale au niveau des filets de la zone 31 des premiers filets en prise et qu'elle est maximale au niveau des filets sans gorge de la zone 35 des derniers filets en prise et de la zone 33 de filets médians ; la raideur des filets mâles 11 de la zone 31 des premiers filets en prise est en outre inférieure à celle des filets avec gorge de faible profondeur dans la zone 33 de filets médians.

La raideur des filets mâles 11 augmente progressivement avec la diminution de profondeur de la gorge depuis le premier filet en prise 11.1 jusqu'au dixième filet en zone 35 de filets médians.

La distance d3.1 est un peu supérieure au rayon R1 de fond de gorge (0,4 mm) de sorte que le fond de gorge ne dépasse à aucun moment l'enveloppe des fonds de filet mais, comme dans le cas des filets femelles, on pourrait très bien réaliser une gorge qui coupe l'enveloppe des fonds des premiers filets.

Il faut par contre éviter de réaliser dans la zone des derniers filets en prise une gorge dont le fond sorte du volume compris entre l'enveloppe des fonds 17 et celle des sommets 19 de filets, la section critique de l'élément fileté mâle étant située au niveau du dernier filet en prise.

La figure 7 représente le joint fileté tubulaire 100 constitué par l'assemblage vissé en position sous le couple de vissage spécifié des éléments filetés 1 et 2 des figures 1 et 4.

La portée d'étanchéité conique mâle 5 interfère radialement avec la portée d'étanchéité conique femelle 6 et la butée mâle 7 force en appui contre la butée femelle 8.

En réaction aux efforts de compression axiale entre butées, les flancs porteurs 13, 14 des filets mâles et femelles sont en appui et développent des pressions de contact.

Par ailleurs les sommets de filets femelles 18 interfèrent radialement avec les fonds de filets mâles 17 alors qu'un jeu subsiste entre sommets de filets mâles 19 et fonds de filets femelles 20.

La figure 7 permet de visualiser les filets en prise et la position des gorges 21 et 22 dans les zones de premiers filets en prise 31, 32 et dans une fraction de la zone de filets médians 33, 35.

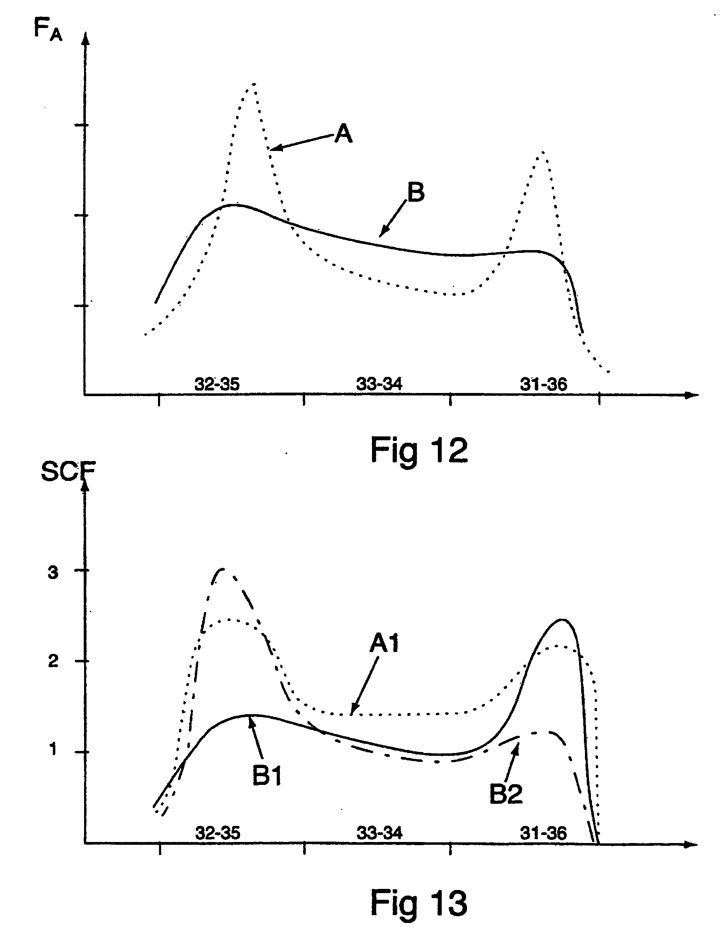

La figure 12 représente par filet le transfert de charge axiale $F_A$ entre flancs porteurs de filets mâles et femelles en prise sur des joints filetés tubulaires sollicités en traction axiale sous une charge telle que le corps du tube 101 est sollicité à 80 % de la limite d'élasticité du matériau (80 % de PBYS).

La courbe B est relative au joint fileté tubulaire de la figure 7 selon l'invention alors que la courbe A est relative à un joint fileté tubulaire standard similaire mais sans gorge.

La courbe A (joint fileté tubulaire standard) présente un aspect en cuvette, le transfert de charge présentant un pic au niveau des premiers et derniers filets en prise ; les filets des zones de filets médians 33, 34 ne peuvent donc pas être utilisés à leur pleine capacité de transfert de charge.

La courbe B (joint fileté tubulaire de la figure 7) montre un transfert de charge beaucoup plus uniforme grâce aux gorges 21, 22 qui diminuent la raideur des premiers filets en prise.

On comprend à partir de cette courbe que le joint fileté tubulaire de la figure 7 montre un excellent comportement tant aux sollicitations statiques (résistance mécanique, étanchéité) que dynamiques (résistance à l'amorçage de fissurations de fatigue).

Un effet similaire pourrait être obtenu avec une gorge réalisée au niveau des derniers filets en prise ou au niveau à la fois des premiers et des derniers filets en prise. Dans le cas de gorge réalisée dans la zone des derniers filets en prise, la pente de la génératrice de l'enveloppe des fonds de gorge devrait bien sûr être inférieure dans cette zone à celle de la partie filetée pour obtenir l'effet escompté sur la raideur des filets.

Les charges extérieures sur les éléments filetés d'un joint fileté tubulaire et les contraintes résultant du vissage se traduisent par un champ de contraintes qui peut présenter un maximum dans le rayon de raccordement en pied de filet entre flanc porteur et fond de filet.

Il est commode de déterminer pour chaque filet un coefficient de concentration de contrainte (SCF) à cet endroit en se ramenant à la contrainte au corps du tube 101 et on peut notamment utiliser à cet effet la définition du coefficient de concentration de contrainte selon ISO 13628 - 7CD1 :

$$SCF = (\sigma^{filet}_{principal}(T_{max}) - \sigma^{filet}_{principal}(T_{min}))/(\sigma^{corps\_tube}(T_{max}) - \sigma^{corps\_tube}(T_{min}))$$

$T_{min}$ et $T_{max}$ étant les charges correspondant à une sollicitation du corps du tube 101 en traction axiale par exemple à 0 et 80 % de sa limite d'élasticité ;

$\sigma^{filet}_{principal}$ étant la plus grande des trois contraintes principales sur un cube élémentaire de matière et prenant en compte aussi bien les sollicitations issues du vissage que celles à laquelle le joint fileté tubulaire est soumis (traction axiale + flexion alternée par exemple);

$\sigma^{corps\_tube}$ étant la contrainte au corps du tube 101 de sorte que le dénominateur de SCF vaut dans l'exemple choisi 80% de la limite d'élasticité effective du tube considéré.

La figure 13 montre les valeurs de SCF du côté de l'élément fileté mâle (courbes A1 et B1) et du côté de l'élément fileté femelle (courbes B2), la courbe A1 étant relative à un joint fileté standard et les courbes B1 et B2 à un joint fileté selon l'invention (figure 7).

L'intérêt de la gorge sur la tenue en fatigue apparaît sur les courbes A1 et B1 de la figure 13 : par rapport à un joint fileté tubulaire de l'état de la technique (courbe A1), la gorge 22 (courbe B1) diminue le pic de SCF au niveau de la zone de derniers filets mâles quitte à augmenter la valeur du pic de SCF au niveau de la zone de premiers filets mâles ; mais ce pic-ci n'est pas très gênant pour la fatigue car la paroi de l'élément fileté mâle au niveau de la zone de premiers filets mâles est peu sollicitée en traction axiale alors que la paroi de l'élément fileté mâle au niveau de la zone de derniers filets mâles doit supporter la charge globale de traction axiale sur l'élément fileté.

La gorge 21 agit de façon similaire sur la forme de la courbe des SCF relative aux filets femelles, la paroi de l'élément fileté femelle au niveau de la zone de premiers filets femelles étant même en compression du fait des butées 7, 8 : courbe B2 de la figure 13 à comparer à une courbe d'allure similaire à la courbe A2 de la même figure.

Le raisonnement qui vient d'être tenu peut être directement appliqué au cas de sollicitations extérieures combinées : par exemple traction axiale statique et pression intérieure statique et flexion cyclique. Il peut être aussi appliqué à des cas où les éléments filetés sont sollicités en compression axiale en adaptant la disposition de la gorge (demi-filets d'engagement sollicités plutôt que demi-filets porteurs).

La figure 8 représente une variante de joint fileté tubulaire pour colonnes sous-marines dites "risers" comportant outre un jeu de portées d'étanchéité intérieures 5, 6 comme dans le cas de la figure 7, un jeu de portées d'étanchéité extérieures 45, 46 pour empêcher toute entrée de fluide par l'intérieur ou par l'extérieur.

Outre les butées internes 7, 8 comme sur la figure 7 (butées principales) le joint fileté de la figure 8 comporte des butées externes constituées par la surface d'extrémité frontale 10 de l'élément fileté femelle et par une surface annulaire correspondante 47 sur l'élément fileté mâle.

Les filetages mâles et femelles 3, 4 sont tout à fait semblables à ceux de la figure 7, une gorge de profondeur décroissante affectant les filets du premier filet femelle au dixième filet femelle et du premier file mâle au neuvième filet mâle et procurant le même effet technique de diminution de raideur de filet et de diminution des valeurs maximales de SCF.

Les gorges permettent en outre une plus grande souplesse de fonctionnement des butées externes et internes.

En effet, la gorge profonde réalisée au niveau des premiers filets mâles et la faible raideur de ceux-ci augmentent la longueur effective sur laquelle la lèvre mâle 9 est mise en compression en fin de vissage : la lèvre 9 est alors comprimée sur une longueur supérieure à sa longueur et pour un même niveau de sollicitation admissible, il est possible de visser davantage le joint fileté tubulaire et de donner davantage d'énergie aux portées d'étanchéité 5, 6.

Un tel effet technique peut déjà être intéressant pour les joints filetés tubulaires à un seul jeu de butées du type de la figure 7 mais il est encore plus intéressant dans le cas de joints filetés tubulaires à deux jeux de butées comme sur la figure 8.

En effet, il est difficile de synchroniser l'action de deux jeux de butées sauf à usiner ces deux jeux de manière extrêmement précise donc extrêmement coûteuse.

La grande capacité de déformation des lèvres mâle 9 et femelle 50 permet de faire fonctionner en butée non seulement les butées principales (internes dans le cas présent) mais également les butées auxiliaires (externes dans le cas présent) dans tous les cas d'appariement entre élément fileté mâle et élément fileté femelle, même. lorsque la distance entre les deux butées mâles est maximale et celle entre les deux butées femelles minimale.

On pourrait obtenir un effet technique similaire en allongeant les lèvres 9, 50 mais ceci diminuerait la compacité du joint fileté tubulaire, ce qui n'est pas souhaité, et nuirait à ses performances d'étanchéité : lèvres 9, 50 trop souples n'induisant pas suffisamment de pression de contact entre les portées d'étanchéité 5, 6, 45, 46.

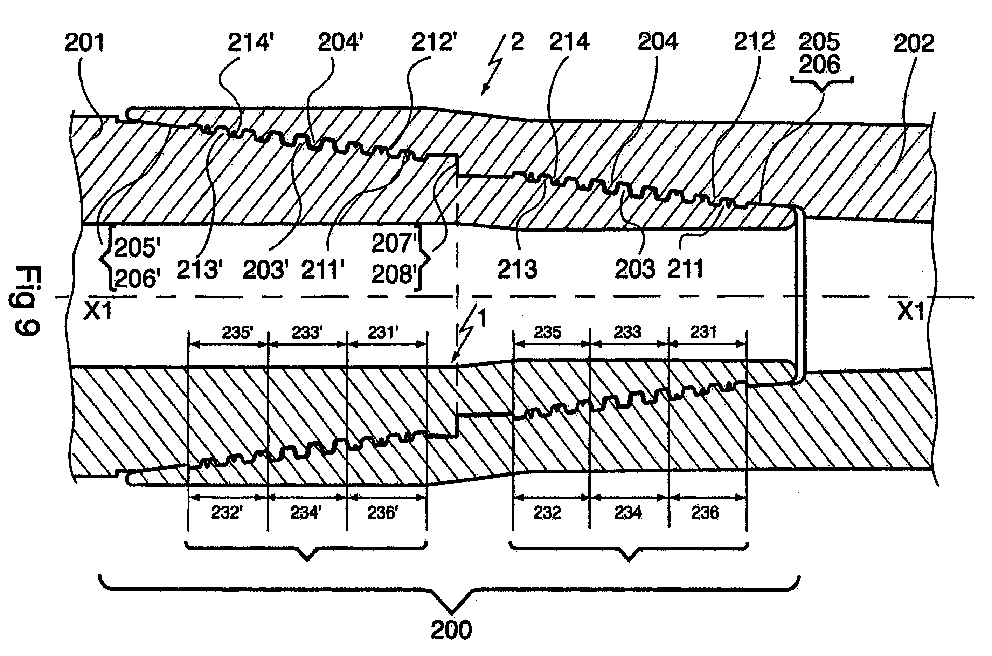

La figure 9 représente encore une autre variante du joint fileté selon l'invention qui comporte comme dans le brevet US 5 687 999 des filetages mâles et femelles coniques chacun à deux parties filetées 203, 203', 204, 204' distantes radialement et axialement l'une de l'autre et séparées par un jeu de butées centrales 207, 208.

Chaque partie filetée conique comporte une fraction de filets naissants dite "run-in" 211, 211', 214, 214' dans laquelle l'enveloppe des fonds de filet est tronquée parallèlement à l'axe de l'élément fileté et une fraction de filets évanouissants dite "run-out" 212, 212', 213, 213' où les sommets de filets sont tronqués parallèlement à l'axe de l'élément fileté.

Chaque partie filetée comporte neuf filets tous en prise, délimitant des zones 231, 231', 232, 232' de premiers filets en prise, des zones 235, 235', 236, 236' de derniers filets en prise et des zones 233, 233', 234, 234' de filets médians, chaque zone comportant trois filets.

Selon la figure 9, une gorge est usinée sur les quatre premiers filets mâles et les quatre premiers filets femelles de chaque partie filetée avec une profondeur qui diminue depuis le premier filet en prise jusqu'au quatrième.

L'effet technique des gorges est le même sur chaque partie filetée que sur le cas du joint fileté de la figure 7 avec filetages à une seule partie filetée et permet de réduire la valeur de SCF au pied des derniers filets en prise de chaque partie filetée.

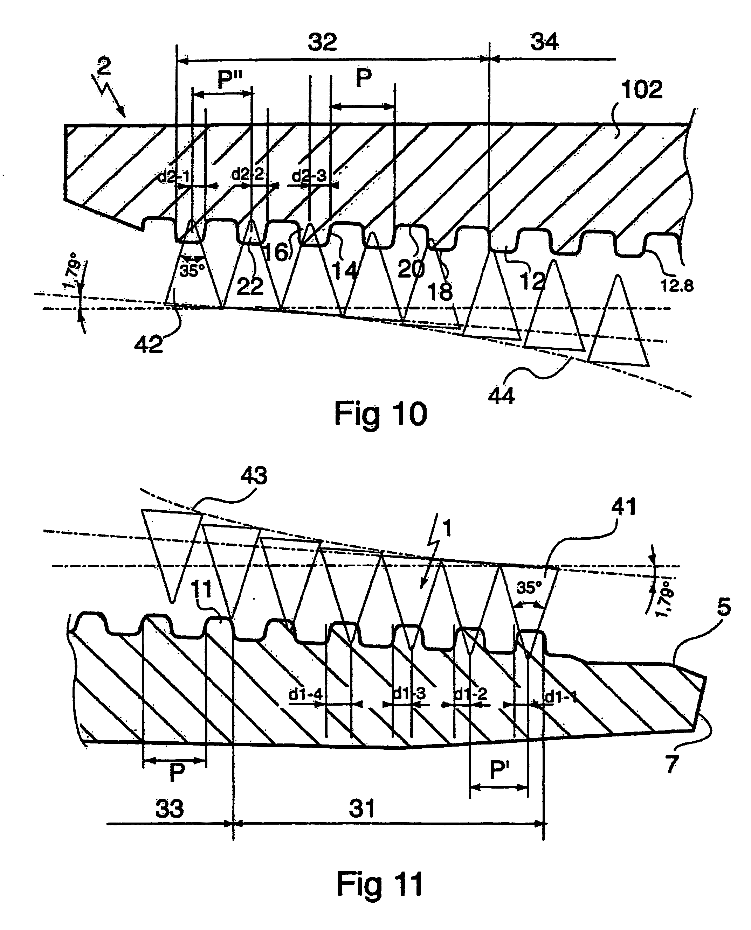

La figure 10 représente une variante de l'élément fileté femelle des figures 1 à 3.

Selon la figure 10, une gorge est usinée dans les filets avec un pas p" inférieur au pas p du filetage de sorte que la distance d2 au flanc porteur augmente depuis le premier filet femelle en prise : d2.1 < d2.2 < d2.3.

Au moins sur les premiers filets, la base de l'outil de forme 42 d'usinage de la gorge est déplacée sur une surface conique de même conicité que le filetage femelle de sorte que la gorge possède une profondeur sensiblement constante sur ces premiers filets.

La distance d2.1 est telle que la gorge ne débouche pas sur le flanc porteur.

Après avoir usiné la gorge sur trois pas de filet, l'outil est éclipsé, sa base suivant la courbe 44 qui est par exemple un arc de cercle ou une hyperbole et décrivant une surface torique ou un hyperboloïde de révolution, pour que la gorge ne débouche pas sur le flanc d'engagement ce qui pourrait gêner l'engagement des filetages mâles et femelles l'un dans l'autre.

La pente de la courbe 44 est au-delà du troisième filet supérieure à celle du filetage pour obtenir l'éclipsage escompté.

On obtient le même effet technique de diminution de raideur des premiers filets en prise sur l'élément fileté femelle de la figure 11 que sur celui des figures 1 à 3.

La figure 11 représente une variante de l'élément fileté mâle des figures 4 à 6 selon laquelle une gorge est usinée comme sur la figure 11 avec un pas p' inférieur au pas p du filetage et une profondeur identique sur les premiers filets.

La distance d1 de la gorge au flanc porteur augmente depuis le premier filet mâle en prise : d1.1 < d1.2 < d1.3.

La base de l'outil 41 d'usinage de la gorge et par conséquent l'outil et sa pointe suivent une surface de révolution composite ; la base est déplacée d'abord selon une surface conique de même conicité que celle du filetage mâle puis suit une surface torique ou une surface hyperboloïde de révolution décrite par la génératrice 43 dont la pente est supérieure à celle du filetage.

Comme dans le cas de la figure 10, ceci permet d'obtenir une diminution de raideur des premiers filets en prise sans entamer le flanc d'engagement des filets mâles.

La présente invention vise à être appliquée à des nombreuses autres variantes de réalisation non décrites dans le présent document sans sortir de la portée de l'invention revendiquée.

A titre d'exemple et de manière non limitative, on peut réaliser la gorge dans toutes sortes de filetages (cylindriques, coniques, cylindro-coniques), avec toutes sortes de filets (filet interférent radialement, "rugged thread" du type selon la demande de brevet EP 454147, coins à largeur variable, à frettage axial) ou de forme générale de filet (trapézoïdale, triangulaire arrondi) ; les gorges peuvent avoir un profil en U ; le fond de gorge peut décrire une surface torique ou hyperboloïde de révolution dès le premier filet, la gorge peut être réalisée à la fois avec un pas variable et une profondeur variable.

Les flancs de filet, notamment le flanc porteur et/ou le flanc d'engagement, peuvent aussi être bombés convexes de manière à maîtriser les caractéristiques du contact (localisation, pression) entre flancs correspondants malgré la variation de sollicitations en service.

Les zones de raccordement entre flancs et fonds de filet peuvent aussi présenter plusieurs parties de rayons de courbure différents adaptés à minimiser la valeur de SCF.

La surface périphérique de l'élément fileté opposée à celle où est réalisé le filetage peut aussi comporter un délardement en forme de gorge réalisé au droit du filetage en réduisant l'épaisseur résiduelle de paroi sous filetage des premiers filets en prise.

On peut encore notamment dans le cas de filets "rugged thread", coin ou à frettage axial dans lesquels les deux flancs de filet peuvent être soumis à des contacts d'intensité variable bénéficier de l'effet technique d'une gorge de pas égal à celui du filetage mais de profondeur variable : une telle gorge diminue la raideur des filets à la fois du côté flanc porteur et du côté flanc d'engagement et permet d'améliorer la tenue en fatigue du joint fileté tubulaire à la fois en traction cyclique, en compression cyclique, en traction - compression ou en flexion alternée.

**Revendications**

1. Elément fileté mâle ou femelle (1, 2) d'un joint fileté tubulaire (100, 200, 400) réalisé en extrémité d'un tube (101, 102, 201, 202) et comprenant extérieurement un filetage mâle (3) ou intérieurement un filetage femelle (4) selon que l'élément fileté est un élément fileté mâle ou un élément fileté femelle, le filetage étant constitué d'au moins une partie filetée (3,4 203, 203', 204, 204'), chaque partie filetée comprenant en s'éloignant de l'extrémité frontale (7, 10) de l'élément fileté une zone dite de premiers filets en prise (31, 32, 231, 231', 232, 232'), une zone dite de filets médians (33, 34, 233, 233', 234, 234') et une zone dite de derniers filets en prise (35, 36, 235, 235', 236, 236'), **caractérisé en ce qu'**une gorge hélicoïdale (21, 22) est réalisée sensiblement radialement dans les filets (11, 12) d'au moins une fraction de la longueur axiale d'au moins une partie filetée de manière à déboucher en sommet de filet (18, 19), **en ce que** la gorge est réalisée dans tout ou partie des filets d'une ou des deux zones d'extrémité, à savoir la zone de premiers filets en prise et la zone des derniers filets en prise, et **en ce qu'**elle est optionnellement réalisée dans les filets de la zone de filets médians, les caractéristiques géométriques de la gorge étant telles qu'elles diminuent la raideur des filets avec gorge de la zone ou des zones d'extrémité par rapport à la raideur des filets de la zone de filets médians.

2. Elément fileté selon la revendication 1 **caractérisé en ce que** la gorge est réalisée dans les filets de la zone de premiers filets en prise (31, 32, 231, 231', 232, 232') et optionnellement dans les filets de la zone de filets médians (33, 34, 233, 233', 234, 234'), les filets de la zone des derniers filets en prise (35, 36, 235, 235', 236, 236') restant pleins.

3. Elément fileté selon la revendication 1 ou 2 **caractérisé en ce que** la gorge (21, 22) possède un profil obtenu par pénétration d'un outil de forme (41, 42) dans les filets (11, 12) de la partie filetée sur une profondeur donnée.

4. Elément fileté selon l'une quelconque des revendications 1 à 3 **caractérisé en ce que** la gorge (21, 22) possède un profil en V à fond arrondi.

5. Elément fileté selon l'une quelconque des revendications 1 à 4 **caractérisé en ce que** le fond de la gorge, lorsque la gorge est réalisée dans la zone de derniers filets en prise, est situé dans le volume de cette zone compris entre l'enveloppe des fonds de filet (17, 20) et celle des sommets de filet (18, 19).

6. Elément fileté selon l'une quelconque des revendications 1 à 5 **caractérisé en ce que** les caractéristiques géométriques de la gorge sont telles que la raideur des filets augmente progressivement depuis le filet d'extrémité en prise (11.1, 12.1) de la zone ou des zones d'extrémité présentant une gorge en allant vers la zone de filets médians.

**7.** Elément fileté selon la revendication 6 **caractérisé en ce que** la profondeur de la gorge diminue régulièrement depuis le filet d'extrémité en prise (11.1, 12.1) de la zone ou des zones d'extrémité présentant une gorge en allant vers la zone de filets médians.

**8.** Elément fileté selon la revendication 6 ou 7 **caractérisé en ce que** la gorge (21, 22) possède un pas d'hélice (p', p") différent de celui des filets (p) de la partie filetée où elle est réalisée.

**9.** Elément fileté selon la revendication 7 ou 8 **caractérisé en ce que** l'enveloppe des fonds de gorge est une surface conique coaxiale à l'élément fileté.

**10.** Elément fileté selon la revendication 7 ou 8 **caractérisé en ce que** l'enveloppe des fonds de gorge est une surface de révolution coaxiale à l'élément fileté de génératrice non rectiligne.

**11.** Elément fileté selon la revendication 9 ou 10 **caractérisé en ce que** la gorge étant réalisée dans la zone des premiers filets en prise et optionnellement dans les filets de la zone de filets médians, la pente de la génératrice de l'enveloppe des fonds de gorge correspondants est supérieure à la pente de la partie filetée où est réalisée la gorge.

**12.** Elément fileté selon l'une quelconque des revendications 1 à 11, **caractérisé en ce que**, les filets étant de forme générale trapézoïdale, la gorge ne débouche pas sur le flanc d'engagement (15, 16) des filets.

**13.** Elément fileté selon l'une quelconque des revendications 1 à 12, **caractérisé en ce que** le filetage comprend au moins deux parties filetées (203, 204), (203', 204') et **en ce que** la gorge est réalisée sur chacune des parties filetées.

**14.** Elément fileté selon l'une quelconque des revendications 1 à 13, **caractérisé en ce qu'**il comprend une seule butée (7) dont la surface de butée est constituée par l'extrémité frontale de l'élément fileté.

**15.** Elément fileté (3, 4) selon l'une quelconque des revendications 1 à 13 **caractérisé en ce qu'**il comprend une première butée (7, 10) dont la surface de butée est constituée par l'extrémité frontale de l'élément fileté considéré et une deuxième butée (8, 47) disposée de manière à coopérer sur un joint fileté vissé en position avec une butée en extrémité frontale d'un élément fileté conjugué (4, 3), les deux butées de l'élément fileté (3, 4) considéré étant aptes à être toutes deux en appui contre deux butées correspondantes dudit élément fileté conjugué (4, 3).

**16.** Elément fileté (3, 4) selon l'une quelconque des revendications 1 à 15 **caractérisé en ce qu'**il comprend au moins une portée d'étanchéité (5, 6) destinée à interférer radialement avec une portée d'étanchéité (6, 5) sur un élément fileté conjugué (4, 3).

**17.** Joint fileté tubulaire (100, 200, 400) comprenant un élément fileté mâle (1) en extrémité d'un premier tube (101, 201) et un élément fileté femelle (2) en extrémité d'un second tube (102, 202), au moins un des deux éléments filetés étant un élément fileté selon l'une quelconque des revendications 1 à 16.

**Claims**

**1.** A male or female threaded element (1, 2) of a threaded tubular connection (100, 200, 400) formed at the end of a pipe (101, 102, 201, 202) and comprising an external male threading (3) or an internal female threading (4) depending on whether the threaded element is a male threaded element or a female threaded element, the threading being constituted by at least one threaded portion (3, 4, 203, 203', 204, 204'), each threaded portion comprising, starting from the front end (7, 10) of the threaded element, a zone termed first engaged thread zone (31, 32, 231, 231', 232, 232'), a zone termed medial thread zone (33, 34, 233, 233', 234, 234') and a zone termed last engaged thread zone (35, 36, 235, 235', 236, 236'), **characterized in that** a helical groove (21, 22) is formed substantially radially in the threads (11, 12) of at least a fraction of the axial length of at least one threaded portion to open at the thread crest (18, 19), **in that** the groove is formed in all or a portion of the threads of one or both end zones, namely the first engaged thread zone and the last engaged thread zone, and **in that** it is optionally formed in the threads of the medial thread zone, the geometrical characteristics of the groove being such that they reduce the stiffness of the threads with a groove in the end zone or zones compared with the stiffness of the threads in the medial thread zone.

**2.** A threaded element according to claim 1, **characterized in that** the groove is formed in threads of the first engaged thread zone (31, 32, 231, 231', 232, 232') and optionally in the threads of the medial thread zone (33, 34, 233, 233', 234, 234'), the threads of the last engaged thread zone (35, 36, 235, 235', 236, 236') remaining solid.

**3.** A threaded element according to claim 1 or claim 2, **characterized in that** the groove (21, 22) has a profile obtained by penetration to a given depth of a forming tool (41, 42) into the threads (11, 12) of the threaded portion.

**4.** A threaded element according to any one of claims 1 to 3, **characterized in that** the groove (21, 22) has the profile of a V with a rounded bottom.

**5.** A threaded element according to any one of claims 1 to 4, **characterized in that** the bottom of the groove, when the groove is formed in the last engaged thread zone, is located in the volume of this zone comprised between the envelope of the thread roots (17, 20) and that of the thread crests (18, 19).

**6.** A threaded element according to any one of claims 1 to 5, **characterized in that** the geometrical characteristics of the groove are such that the stiffness of the threads increases steadily from the end engaged thread (11.1, 12.1) of the end zone or zones with a groove going towards the medial thread zone.

**7.** A threaded element according to claim 6, **characterized in that** the groove depth reduces regularly from the end engaged thread (11.1, 12.1) of the end zone or zones with a groove going towards the medial thread zone.

**8.** A threaded element according to claim 6 or claim 7, **characterized in that** the groove (21, 22) has a helical pitch (p', p") that is different from that of the threads (p) of the threaded portion in which the groove is formed.

**9.** A threaded element according to claim 7 or claim 8, **characterized in that** the envelope of the groove bottoms is a conical surface coaxial with the threaded element.

**10.** A threaded element according to claim 7 or claim 8, **characterized in that** the envelope of the groove bottoms is a surface of revolution coaxial with the threaded element and with a non-rectilinear generatrix.

**11.** A threaded element according to claim 9 or claim 10, **characterized in that** since the groove is formed in the first engaged thread zone and optionally in the threads of the medial thread zone, the slope of the generatrix of the envelope of the corresponding groove bottoms is greater than the slope of the threaded portion in which the groove is formed.

**12.** A threaded element according to any one of claims 1 to 11, **characterized in that** the threads have a generally trapezoidal form and the groove does not open onto the stabbing flank (15, 16) of the threads.

**13.** A threaded element according to any one of claims 1 to 12, **characterized in that** the threading comprises at least two threaded portions (203, 204), (203', 204') and **in that** the groove is produced in each of the threaded portions.

**14.** A threaded element according to any one of claims 1 to 13, **characterized in that** it comprises a single abutment (7) the abutment surface of which is constituted by the front end of the threaded element.

**15.** A threaded element (3, 4) according to any one of claims 1 to 13, **characterized in that** it comprises a first abutment (7, 10) the abutment surface of which is constituted by the front end of the threaded element under consideration and a second abutment (8, 47) disposed so as to co-operate on a made up connection with an abutment at the front end of a mating threaded element (4, 3), both of the two abutments of the threaded element (3, 4) under consideration being capable of bearing against the two corresponding abutments of said mating threaded element (4, 3).

**16.** A threaded element (3, 4) according to any one of claims 1 to 15, **characterized in that** it comprises at least one sealing surface (5, 6) intended for radial interference with a sealing surface (6, 5) on a mating threaded element (4,3).

**17.** A threaded tubular connection (100, 200, 400) comprising a male threaded element (1) at the end of a first pipe (101, 201) and a female threaded element (2) at the end of a second pipe (102, 202), at least one of the two threaded elements being a threaded element according to any one of claims 1 to 16.

**EP 1 373 775 B1**

**Patentansprüche**

1. Außengewindeelement oder Innengewindeelement (1, 2) einer Gewinde-Rohrverbindung (100, 200, 400), das am Ende eines Rohrs (101, 102, 201, 202) hergestellt ist und entweder außen ein Außengewinde (3) oder innen ein Innengewinde (4) aufweist, je nachdem, ob das Gewindeelement ein Außengewindeelement oder ein Innengewindelement ist, wobei das Gewinde aus mindestens einem Gewindebereich (3, 4, 203, 203', 204, 204') besteht, wobei jeder Gewindebereich in einer Richtung weg vom Stirnende (7, 10) des Gewindeelements eine sogenannte Zone erster Eingriffs-Gewindegänge (31, 32, 231, 231', 232, 232'), eine Zone mittlerer Gewindegänge (33, 34, 233, 233', 234, 234') und eine Zone letzter Eingriffs-Gewindegänge (35, 36, 235, 235', 236, 236') aufweist, **dadurch gekennzeichnet, dass** eine schraubenförmige Rille (21, 22) im wesentlichen radial in den Gewindegängen (11, 12) mindestens eines Bruchteils der axialen Länge mindestens eines Gewindebereichs derart ausgebildet ist, dass sie am Gewindegangscheitel (18, 19) mündet, dass die Rille in allen oder einem Teil der Gewindegänge einer oder den beiden Endzonen, d.h. der Zone erster Eingriffs-Gewindegänge und der Zone letzter Eingriffs-Gewindegänge, ausgebildet ist, und dass sie optional in den Gewindegängen der Zone mittlerer Gewindegänge ausgebildet ist, wobei die geometrischen Merkmale der Rille derart sind, dass sie die Steifheit der Gewindegänge mit Rille in der (oder den) Endzone(n) in Bezug auf die Steifheit der Gewindegänge der Zone mittlerer Gewindegänge verringern.

2. Gewindeelement nach Anspruch 1, **dadurch gekennzeichnet, dass** die Rille in den Gewindegängen der Zone erster Eingriffs-Gewindegänge (31, 32, 231, 231', 232, 232') und optional in den Gewindegängen der Zone mittlerer Gewindegänge (33, 34, 233, 233', 234, 234') ausgebildet ist, während die Gewindegänge der Zone letzter Eingriffs-Gewindegänge (35, 36, 235, 235', 236, 236') massiv bleiben.

3. Gewindeelement nach Anspruch 1 oder 2, **dadurch gekennzeichnet, dass** die Rille (21, 22) ein Profil aufweist, das durch Eindringen eines Formwerkzeugs (41, 42) in die Gewindegänge (11, 12) des Gewindebereichs über eine gegebene Tiefe erhalten wird.

4. Gewindeelement nach einem der Ansprüche 1 bis 3, **dadurch gekennzeichnet, dass** die Rille (21, 22) ein V-förmiges Profil mit abgerundetem Grund aufweist.

5. Gewindeelement nach einem der Ansprüche 1 bis 4, **dadurch gekennzeichnet, dass** der Rillengrund, wenn die Rille in der Zone letzter Eingriffs-Gewindegänge ausgebildet ist, sich in dem Raum dieser Zone befindet, der zwischen der Hüllkurve der Gewindeganggründe (17, 20) und derjenigen der Gewindegangscheitel (18, 19) liegt.

6. Gewindeelement nach einem der Ansprüche 1 bis 5, **dadurch gekennzeichnet, dass** die geometrischen Eigenschaften der Rille so sind, dass die Steifheit der Gewindegänge vom Eingriffs-Endgewindegang (11.1, 12.1) der eine Rille aufweisenden Endzone(n) zu der Zone mittlerer Gewindegänge hin stetig zunimmt.

7. Gewindeelement nach Anspruch 6, **dadurch gekennzeichnet, dass** die Tiefe der Rille vom Eingriffs-Endgewindegang (11.1, 12.1) der eine Rille aufweisenden Endzone(n) zu der Zone mittlerer Gewindegänge hin gleichmäßig abnimmt.

8. Gewindeelement nach Anspruch 6 oder 7, **dadurch gekennzeichnet, dass** die Rille (21, 22) einen Schraubengang (p', p") aufweist, der sich von demjenigen (p) der Gewindegänge des Gewindebereichs unterscheidet, in dem sie ausgebildet ist.

9. Gewindeelement nach Anspruch 7 oder 8, **dadurch gekennzeichnet, dass** die Hüllkurve der Rillengründe eine zum Gewindeelement koaxiale, konische Fläche ist.

10. Gewindeelement nach Anspruch 7 oder 8, **dadurch gekennzeichnet, dass** die Hüllkurve der Rillengründe eine drehsymmetrische Fläche koaxial zum Gewindeelement mit nicht geradliniger Mantellinie ist.

11. Gewindeelement nach Anspruch 9 oder 10, **dadurch gekennzeichnet, dass**, da die Rille in der Zone erster Eingriffs-Gewindegänge und optional in den Gewindegängen der Zone mittlerer Gewindegänge ausgebildet ist, die Neigung der Mantellinie der Hüllkurven der entsprechenden Rillengründe größer ist als die Neigung des Gewindebereichs, in dem die Rille ausgebildet ist.

12. Gewindeelement nach einem der Ansprüche 1 bis 11, **dadurch gekennzeichnet, dass** bei allgemein trapezförmigen Gewindegängen die Rille nicht an der Eingriffsflanke (15, 16) der Gewindegänge mündet.

**13.** Gewindeelement nach einem der Ansprüche 1 bis 12, **dadurch gekennzeichnet, dass** das Gewinde mindestens zwei Gewindebereiche (203, 204), (203', 204') aufweist, und dass die Rille in jedem der Gewindebereiche ausgebildet ist.

**14.** Gewindeelement nach einem der Ansprüche 1 bis 13, **dadurch gekennzeichnet, dass** es einen einzigen Anschlag (7) aufweist, dessen Anschlagfläche aus dem Stirnende des Gewindeelements besteht.

**15.** Gewindeelement (3, 4) nach einem der Ansprüche 1 bis 13, **dadurch gekennzeichnet, dass** es einen ersten Anschlag (7, 10), dessen Anschlagfläche aus dem Stirnende des betrachteten Gewindeelements besteht, und einen zweiten Anschlag (8, 47) aufweist, der so angeordnet ist, dass er bei einer zusammengeschraubten Gewindeverbindung mit einem Anschlag am Stirnende eines zugehörigen Gewindeelements (4, 3) zusammenwirkt, wobei die beiden Anschläge des betrachteten Gewindeelements (3, 4) in der Lage sind, gegen zwei entsprechende Anschläge des zugehörigen Gewindeelements (4, 3) anzuliegen.

**16.** Gewindeelement (3, 4) nach einem der Ansprüche 1 bis 15, **dadurch gekennzeichnet, dass** es mindestens eine Dichtungslagerfläche (5, 6) aufweist, die dazu bestimmt ist, radial mit einer Dichtungslagerfläche (6, 5) auf einem zugeordneten Gewindeelement (4, 3) zusammenzuwirken.

**17.** Gewinde-Rohrverbindung (100, 200, 400), die ein Außengewindeelement (1) am Ende eines ersten Rohrs (101, 201) und ein Innengewindeelement (2) am Ende eines zweiten Rohrs (102, 202) aufweist, wobei mindestens eines der Gewindeelemente ein Gewindeelement nach einem der Ansprüche 1 bis 16 ist.

**Fig 1**

**Fig 2**

**Fig 3**

## Fig 4

## Fig 5

## Fig 6

EP 1 373 775 B1

Fig 7

Fig 8

Fig 9

Fig 10

Fig 11

Fig 12

Fig 13